Europäisches Patentamt

European Patent Office

Office européen des brevets

(11) Publication number: **0 454 907 A1**

## (12) EUROPEAN PATENT APPLICATION

(21) Application number: 90201111.3

(51) Int. Cl.⁵: **C09K 11/79, G21K 4/00**

(22) Date of filing: 03.05.90

(43) Date of publication of application:
06.11.91 Bulletin 91/45

(84) Designated Contracting States:
AT BE CH DE DK ES FR GB GR IT LI LU NL SE

(71) Applicant: AGFA-GEVAERT naamloze
vennootschap
Septestraat 27
B-2510 Mortsel(BE)

(72) Inventor: Schipper, Willem
J.v.d. Borchstraat 39
NL-3515 XB Utrecht(NL)
Inventor: Blasse, George
Tinbergenweg 76
NL-3731 LH De Bilt(NL)
Inventor: Neyens, Lodewijk Marie
Dries 11
B-2550 Kontich(BE)
Inventor: Tecotzky, Melvin
27 North Linden Lane
Mendham, NJ 07945(US)
Inventor: de Jaeger, Nikolaas Cyriel
Hoverheide 35
B-2540 Hove(BE)

(54) Reproduction of x-ray images with photostimulable phosphor.

(57) A method for recording and reproducing an X-ray image is provided which method comprises the steps of :
(1) causing a photostimulable phosphor to absorb image-wise or pattern-wise modulated X-rays,
(2) photostimulating said phosphor with stimulating electromagnetic radiation selected from visible light and infrared light to release from the phosphor in accordance with the absorbed X-rays electromagnetic radiation different in wavelength characteristic from the radiation used in the photo-stimulation, and
(3) detecting said light emitted by photostimulation,
wherein said phosphor is an oxyorthosilicate corresponding to the following empirical formula (I) :

$$Y_2SiO_5:Ce^{3+}, Sm^{3+} \quad (I)$$

wherein :
$Ce^{3+}$ is present in an atomic percentage in the range from 0.01 to 5 with respect to the yttrium concentration taken as 100 atom %,
$Sm^{3+}$ is present in an atomic percentage in the range from 0 to 5 with respect to the yttrium concentration taken as 100 atom %.

This invention relates to a photostimulable oxyorthosilicate phosphor and to a method of recording and reproducing an X-ray pattern by means of a binder layer containing said phosphor in a screen or panel.

It is well known that X-rays can cause appropriate substances to luminesce. Substances showing the phenomenon of luminescence under the influence of X-rays are called phosphors.

According to a classical method of recording and reproducing an X-ray pattern phosphors are used to form radiographs in conjunction with photographic silver halide emulsion materials being highly sensitive to the emitted fluorescent light.

The phosphors used in said screens should be luminescent but not exhibit appreciable long lived emission after the X-ray source is switched off. If a screen with marked-long lived emission were to be used, it would retain its image after the X-ray beam had ceased and fresh film contacted with it would gain a so-called ghost impression that would interfere with the next image to be made. This phenomenon being undesirable in the production of radiographs by contact exposure with a fluorescent X-ray conversion screen is known under the terms "after-glow" and "lag".

According to another method of recording and reproducing an X-ray pattern disclosed e.g. in US-P 3,859,527 a special type of phosphor is used, known as a photostimulable phosphor, which being incorporated in a panel is exposed to incident pattern-wise modulated X-rays and as a result thereof temporarily stores therein energy contained in the X-ray radiation pattern. At some interval after the exposure, a beam of visible or infra-red light scans the panel to stimulate the release of stored energy as light that is detected and converted to sequential electrical signals which are processable to produce a visible image. For this purpose, the phosphor should store as much as possible of the incident X-ray energy and emit as little as possible of energy until stimulated by the scanning beam.

As described in US-P 4,239,968 europium-doped barium fluorohalides are particularly useful for application as stimulable phosphors for their high sensitivity to stimulating light of a He-Ne laser beam (633 nm), ruby laser beam (694 nm) and YAG laser beam (1064 nm), the optimum of stimulation being in the range of 500 to 700 nm. The light emitted on stimulation, called stimulated light is situated in the wavelength range of 350 to 450 nm with its main peak at 390 nm (ref. the periodical Radiology, September 1983, p. 834).

As described in said periodical the imaging plate containing the stimulable phosphor can be used repeatedly to store X-ray images simply by flooding it with light to erase the residual energy it contains.

As can be learned from DE-OS 3,347,207 europium-doped barium fluorohalides are chemically not stable and are more particularly sensitive to moisture which according to experiments affects their fluorescence power.

Classical X-ray phosphors by virtue of the fact that they reemit promptly most of the absorbed energy and store very little are less suitable as storage phosphors. So, there is still an intensive research going on to find phosphors that fulfil the requirements related to efficient X-ray energy storage, photo-stimulability and moisture resistance.

Oxyorthosilicate phosphors activated with trivalent terbium have been described in published European Patent Application 0 249 660 for use in classical X-ray conversion screens applied in medical radiography.

From the paper of Leskelä et al., [ J. Less-Common Metals, 112 (1985) 71-74] it is known how to prepare $Y_2SiO_5$ and $Gd_2SiO_5$ phosphors doped simultaneously with terbium and cerium for use in fluorescent lamps, but no indication has been given with respect to the use of said phosphors for the conversion of X-rays into visible light.

It is an object of the present invention to provide a process for recording and reproducing X-ray patterns wherein particular non-hygroscopic oxyorthosilicate phosphors are used for storing energy from incident X-rays and releasing said energy in good yield by photostimulation in the form of electronically detectable photons of shorter wavelength than the light used in the photostimulation.

It is a further object of the present invention to provide an X-ray screen or panel containing said photostimulable phosphors in particulate form dispersed in a binder layer.

Other objects and advantages of the present invention will become clear from the following description.

In accordance with the present invention a method for recording and reproducing an X-ray image is provided which comprises the steps of :

(1) causing a photostimulable phosphor to absorb image-wise or pattern-wise modulated X-rays,

(2) photostimulating said phosphor with stimulating electromagnetic radiation selected from visible light and infrared light to release from the phosphor in accordance with the absorbed X-rays electromagnetic radiation different in wavelength characteristic from the radiation used in the photo-stimulation, and

(3) detecting said light emitted by photostimulation,

characterized in that said phosphor is an oxyorthosilicate corresponding to the following empirical formula (I) :

$Y_2SiO_5:Ce^{3+}, Sm^{3+}$ (I)

wherein :

$Ce^{3+}$ is present in an atomic percentage in the range from 0.01 to 5 with respect to the yttrium concentration taken as 100 atom %,

$Sm^{3+}$ is present in an atomic percentage in the range from 0 to 5 with respect to the yttrium concentration taken as 100 atom %.

By the presence of $Sm^{3+}$ as codopant the stimulation spectrum shifts to the longer wavelengths, more particularly is situated between 600 and 700 nm which makes the phosphor particularly suitable for stimulation with He-Ne laser emitting at 633 nm.

The photostimulable phosphors suited for use according to the present invention can be prepared by firing solid state mixtures of $Y_2O_3$ and colloidal $SiO_2$ together with $CeO_2$, and optionally $Sm_2O_3$, preferably in the presence of $NH_4F$ (e.g. 5 wt % on the total solids) as a flux. Good results are obtained by carrying out the firing under a flow of nitrogen at 1250 $^\circ$C for about 5 h. By applying said procedure the Ce dopant is present in the final phosphor in the trivalent state.

For use in the X-ray image recording method according to the present invention the photostimulable phosphor is preferably present in dispersed form in a binder layer that may be supported or self-supporting and forms a screen or panel, called X-ray image storage panel.

Suitable binders for forming a binder layer incorporating said phosphor in dispersed form are film forming organic polymers, e.g. a cellulose acetate butyrate, polyalkyl (meth)acrylates, e.g. polymethyl methacrylate, a polyvinyl-n-butyral e.g. as described in the United States Patent Specification 3,043,710, a copoly(vinyl acetate/vinyl chloride) and a copoly(acrylonitrile/butadiene/styrene) or a copoly(vinyl chloride/vinyl acetate/vinyl alcohol) or mixture thereof.

It is preferred that a minimum amount of binder be employed to obtain a high X-ray energy absorption. However, a very small amount of binding agent may result in a too brittle layer, so a compromise has to be made. The coverage of the phosphor is preferably in the range from about 300 to 1500 g/m2.

According to a preferred embodiment the phosphor layer is used as a supported layer on a support sheet. Suitable support materials are made of a film forming organic resin, e.g. polyethylene terephthalate, but paper supports and cardboard supports optionally coated with a resin layer such as an alpha-olefinic resin layer are also particularly useful. Further are mentioned glass supports and metal supports. The thickness of the phosphor layer is preferably in the range of 0.05 mm to 0.5 mm.

For the preparation of the photostimulable phosphor screen the phosphor particles are intimately dispersed in a solution of the binder and then coated on the support and dried. The coating of the present phosphor binder layer may proceed according to any usual technique, e.g. by spraying, dip-coating or doctor blade coating. After coating, the solvent(s) of the coating mixture is (are) removed by evaporation, e.g. by drying in a hot (60 $^\circ$C) air current.

An ultrasonic treatment can be applied to improve the packing density and to perform the de-aeration of the phosphor-binder combination. Before the optional application of a protective coating the phosphor-binder layer may be calendered to improve the packing density (i.e. the number of grams of phosphor per cm3 of dry coating).

Optionally, a light-reflecting layer is provided between the phosphor-containing layer and its support to enhance the output of light emitted by photostimulation. Such a light-reflecting layer may contain white pigment particles dispersed in a binder, e.g. titanium dioxide particles, or it may be made of a vapour-deposited metal layer, e.g. an aluminium layer, or it may be a coloured pigment layer absorbing stimulating radiation but reflecting the emitted light as described e.g. in US-P 4,380,702.

In order to improve resolution it is possible to provide underneath the phosphor layer a layer absorbing the emitted light e.g. a carbon black containing layer or to use a coloured support e.g. a grey or black film support.

According to an embodiment of the above defined method for recording and reproducing an X-ray image the photostimulation of the phosphor-binder layer that has been image-wise or pattern-wise exposed with X-rays proceeds with a scanning light beam, preferably a laser light beam, e.g. a beam of a He-Ne or argon ion laser.

The light emitted by photostimulation is detected preferably with a transducer transforming light energy into electrical energy, e.g. a phototube (photomultiplier) providing sequential electrical signals that can be digitized and stored. After storage these signals can be subjected to digital processing. Digital processing includes e.g. image contrast enhancement, spatial frequency enhancement, image subtraction, image addition and contour definition of particular image parts.

According to one embodiment for the reproduction of the recorded X-ray image the optionally processed digital signals are transformed into analog signals that are used to modulate a writing laser beam, e.g. by means of an acousto-optical modulator. The modulated laser beam is then used to scan a photographic material, e.g. silver halide emulsion film whereon the X-ray image optionally in image-processed state is reproduced. For said embodiment and apparatus used therein reference is made e.g. to the periodical Radiology, September 1983, p. 833-838.

According to another embodiment the digital signals obtained from the analog-digital conversion of the electrical signals corresponding with the light obtained through photostimulation are displayed on a cathode-ray tube. Before display the signals may be processed by computer. Conventional image processing techniques can be applied to reduce the signal-to-noise ratio of the image and enhance the image quality of coarse or fine image features of the radiograph.

On the phosphors of the present invention measurements have been carried out for determining their photo-physical properties.

First the emission spectrum of the phosphor under X-ray excitation is measured. The measurement proceeds with a spectrofluorometer in which excitation by X-ray irradiation is carried out with an X-ray source operating at 110 kVp. During continuous X-ray excitation the emitted light is scanned by a monochromator coupled to a photomultiplier. This emission spectrum is identical to that obtained upon photostimulation and is used to determine which filters are to be used in all the other measurements. A first filter transmits the emitted light obtained by photostimulation but filters out almost all of the stimulating light. For He-Ne laser stimulation a 2.5 mm HOYA B 390 filter is used, whose transmission spectra are described in the HOYA Color Filter Glass Catalogue No. 8503E published by the HOYA Corporation, Tokyo, Japan.

The prompt emission is measured by continuously exposing a screen to an X-ray source operating at 85 kV peak and 20 mA and monitoring the emission. For this purpose a MONODOR (trade name of Siemens AG - W. Germany) X-ray source was used. The low energy X-rays are filtered out from the X-ray spectrum with a 21 mm thick aluminium plate. The high voltage is sinusoidal with frequency of 50 Hz resulting in short X-ray pulses at a frequency of 100 Hz. The dose of a single pulse was determined by measuring the dose for a known time interval (1 second) and counting the number of pulses. The emission is measured through a 1.77 mm2 pinhole with a HAMAMATSU (trade name) R 1398 photomultiplier coupled to an amplifier and monitored with a TEKTRONIX (trade name) 7D20 digital oscilloscope. 100 pulses per second are detected. The trace of one of these is stored using the oscilloscope and the area beneath the curve is calculated. Since the sensitivity factors for the photomultiplier, amplifier and digitizer are known, the prompt emission energy per pulse can be calculated and the prompt emission efficiency in units of pJ/mm2/mR is obtained by dividing this value by the X-ray dose of the exciting pulse.

In the second measurement the total photostimulable energy stored upon exposure to a given X-ray dose is determined. Prior to X-ray excitation any residual energy still present in the phosphor screen is removed by irradiation. To avoid photoexcitation during erasure a cut-off SCHOTT GG435 filter described in Filterglas Catalogue No. 3531/4d published by SCHOTT GLASWERKE, Mainz, W.-Germany, which filter eliminates all wavelengths below 435 nm, is placed between a lamp emitting photostimulating light and the phosphor screen. The phosphor screen is then excited with an X-ray source operating with Mo-cathode at 80 kVp and 20 mA. For that purpose the MONODOR X-ray source of Siemens AG - W. Germany may be used. The low energy X-rays are filtered out with a 21 mm thick aluminium plate to harden the X-ray spectrum. After X-ray excitation the phosphor screen is transferred in the dark to the measurement setup. In this setup laser light is used to photostimulate the X-ray irradiated phosphor screen. The laser used in this measurement is the He-Ne (633 nm) laser but other lasers such as argon ion (514 nm) and semi-conductor (750 and 820 nm) lasers may be used.

The laser-optics comprise an electronic shutter, a beam-expander and two filters. A photomultiplier (Hamamatsu R 1398) collects the light emitted by the photostimulation and gives a corresponding electrical current. The measurement procedure is controlled by a Hewlett Packard HP 9826 computer connected to a HP 6944 multiprogrammer. After amplification with a current to voltage converter a TEKTRONIX 7D20 digital oscilloscope visualizes the photocurrent obtained. When the electronic shutter is opened the laser beam begins to stimulate the phosphor screen and the digital oscilloscope is triggered. Using a pinhole placed in contact with the screen an area of only 1.77 mm2 is exposed. Only half of the laser power (5 mW) reaches the screen surface. In this way the intensity of the stimulating beam is more uniform. A red filter (3 mm SCHOTT OG 590) placed immediately in front of the laser eliminates the weak ultraviolet components in the laser emission. The signal amplitude from the photomultiplier is linear with the intensity of the photostimulating light and with the stored photostimulable energy. The signal decreases exponentially. When the signal curve is entered the oscilloscope is triggered a second time to measure the offset which is defined as the component of error that is constant and independent of inputs. After subtracting this offset the point at which the signal reaches l/e of the maximum value is calculated. The integral below the curve is then calculated from the start to this l/e point. The function is described mathematically by $f(t) = A.e^{-t/\tau}$: wherein A is the amplitude, $\tau$ is the time constant, t is stimulation time, and e is the base number of a natural logarithm.

The l/e point is reached when $t = \tau$. When $t = \tau \ln 2$ half of the stored energy has been released. To obtain said result, the computer multiplies the integral with the sensitivity of the system. The sensitivity of the photomultiplier and amplifier have therefore to be measured as a function of anode-cathode voltage of the photomultiplier and the convolution of the emission spectrum of the phosphor and the transmission spectrum of the separating filter has to be calculated. Because the emission light is scattered in all directions only a fraction of the emitted light is detected by the photomultiplier. The position of the panel and photomultiplier are such that 10 % of the total emission is detected by the photomultiplier. After all these corrections have been made a conversion efficiency value (C.E.) is obtained in $pJ/mm^3/mR$. This value varies with screen thickness and therefore for measurements to be comparable they have to be carried out at constant phosphor coverage.

The photostimulation energy is defined as the energy necessary to stimulate half the stored energy and is expressed in $\mu J/mm2$.

In a third measurement the response time is determined. This is measured by stimulating the phosphor screen with short light pulses. The laser light is modulated with an acousto-optical modulator. The rise time of the stimulating light is 15 ns. The emitted light is measured with a photomultiplier (Hamamatsu R 1398) with a small anode resistor (150 ohm) to obtain a wide bandwidth (10 MHz). The rise time of the measurement system itself is 35 ns. The response time is the time to reach half of the maximum intensity of the emitted light and is designated tl/2.

In a fourth measurement the stimulation spectrum is determined. The light of a tungsten (quartz-iodine) lamp is fed into a monochromator (Bausch and Lomb - W. Germany) and then mechanically chopped with a rotating wheel with a single hole. The lamp provides a continuous spectrum extending from the near UV through the visible spectrum into the infrared. The 33-86-02 grating from Bausch and Lomb is a 1350 line/mm grating covering the visible range from 350 nm to 800 nm in the first order and is blazed at 500 nm. The wavelength of the stimulating light can be set via a step motor connected to the monochromator under the control of a computer. The second harmonic of the monochromator is eliminated by placing a 4 mm Schott GG435 filter in front of the phosphor screen. By chopping the stimulating light (duty cycle 1/200) only a small fraction of the absorbed energy in the phosphor is released. Only the AC signal is measured to eliminate the offset caused due to e.g. the dark current of the photomultiplier. A good signal to noise ratio is obtained by averaging several pulses. Upon completing the measurement the computer corrects the curve for the intensity wavelength dependence of the tungsten lamp. The measurement can be repeated so that the evolution of the stimulation spectrum can be followed over a period of up to 15 hours.

In a fifth measurement the dependence of the conversion efficiency upon the time between X-ray exposure and stimulation (so-called "dark-decay") was determined at room temperature. It was evaluated by exciting the phosphor with a high dose of X-rays, inserting the samples in a black box to avoid unintentional light exposure and periodically stimulating with a light (650 nm) emitting diode (LED) source with short (20 $\mu$s) low power pulses controlled by a function generator. Normally a burst of 8 pulses is given per time interval. The energy of all the pulses together is so low that only 1 % of the amount of stored energy is stimulated during the determination. The emitted light is separated from the stimulating light using a SCHOTT BG-3 or HOYA B390 filter and is amplified with a photomultiplier and a sensitive electronic amplifier. The pulses are monitored using a digital oscilloscope and the average pulse from the 8 pulse burst is sent to the ordinator to calculate the amplitude of the signal. If this amplitude does not match the sensitivity of the oscilloscope, the sensitivity is changed automatically and the measurement is started again. Measurements lasting 100 h or more can be carried out depending on the time interval between the bursts of the pulses (normally 30 minutes). The ordinator stores all the measurements in its memory and when the measurement is completed the so-called dark-decay curve is plotted out.

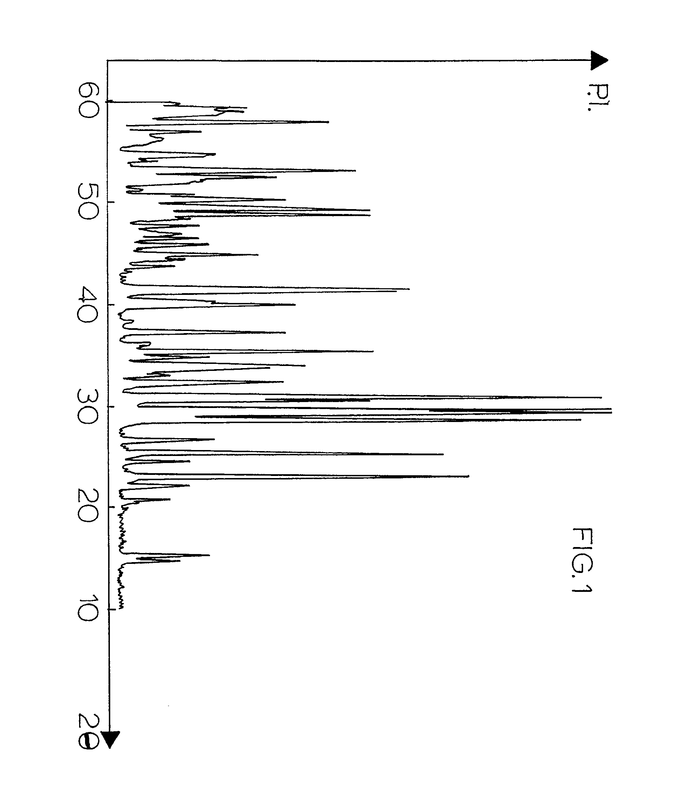

The present invention is illustrated by the following examples wherein reference is made to curves represented in Fig. 1 to 4. The examples are not limiting in any way. In the examples the percentages and ratios are by weight unless otherwise mentioned. The atomic weight percentages relate to gram-atom of a particular dopant relative to the total gram-atoms of all the dopants together.

Fig. 1 relates to the X-ray diffraction spectrum (XRD spectrum) of an orthosilicate phosphor used according to the present invention obtained by the procedure of Example 1. In this Figure 1 peak intensity (P.I.) is plotted against 2xTheta ($2\theta$), being the angle in degrees at which the peaks are observed.

Figure 2 represents the "prompt" emission spectrum of the phosphor of Example 1. In the diagram the relative intensity of the prompt emission (R.I.E.$_p$) is in the ordinate and the wavelength range in nm is in the abscissa.

Figures 3 and 4 represent stimulation spectra of the phosphors of Examples 1 and 2 respectively. In the diagrams the relative intensity of the stimulated emission (R.I.E.$_S$) at its peak wavelength is in the ordinate and the wavelength of the stimulating light in nm is in the abscissa.

EXAMPLE 1

2.25810 g of $Y_2O_3$, 0.60000 g of colloidal $SiO_2$ (AEROSIL 380 - trade name of DEGUSSA W. Germany), 0.060000 g of $NH_4F$ and 0.00172 g of $CeO_2$ were mixed for 15 minutes with 10 ml of ethanol in a planetary ball mill. The mixture was fired in an aluminium oxide crucible for about 5 hours at 1250 °C after the oven had been heated to that temperature in 8 hours. Nitrogen was flowed through the oven at a rate of about 50 ml/min.

$Y_2SiO_5$ doped with 0.05 at % $Ce^{3+}$ was obtained. The XRD spectrum of this phosphor is shown in Figure 1.

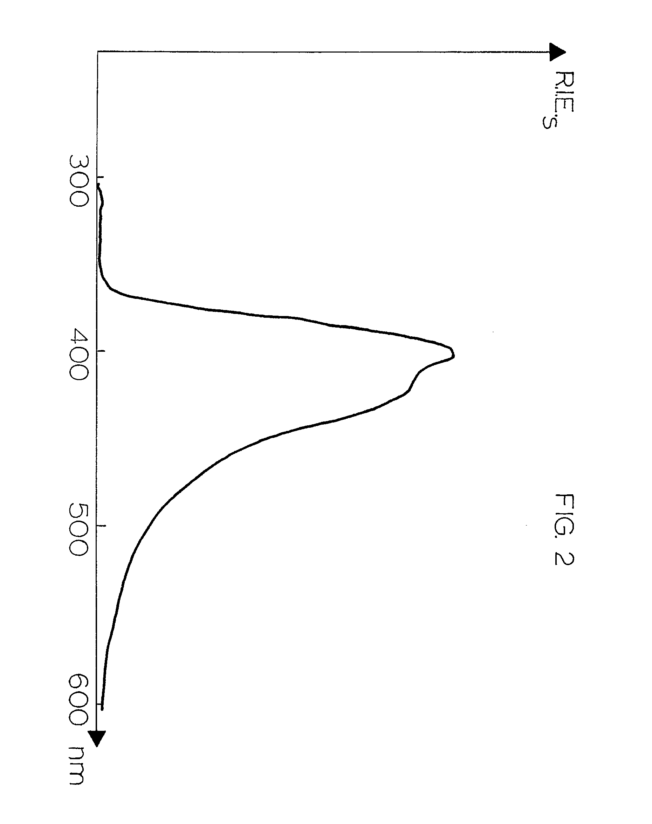

This sample was then subjected to X-ray excitation and the "prompt" emission spectrum determined. This is characterized by a double emission peak at respectively 397 nm and 415 nm with a half width of about 70 nm as shown in Figure 2.

The ground powder was then dispersed in a binder solution containing cellulose acetobutyrate dissolved in methyl ethyl ketone. The dispersion obtained was coated onto a 100 μm thick transparent sheet of polyethylene terephthalate to give a coating weight of 1000 g/m2. This screen was then used to determine the energy storage characteristics of the phosphor. After erasing any residual stored energy by irradiating with white light filtered to remove the UV-components, the screen was irradiated with a given dose of X-rays and then stimulated with He-Ne laser light (633 nm) as described hereinbefore. The light obtained during irradiation with the stimulating light was detected with a photomultiplier and the conversion efficiency determined as described hereinbefore.

The light obtained by photostimulation was filtered to remove the residual stimulating light without attenuating the emitted light detected with the photomultiplier.

A conversion efficiency of 1.80 pJ/mm$^3$/mR and a stimulation energy of 94 μJ/mm2 were obtained.

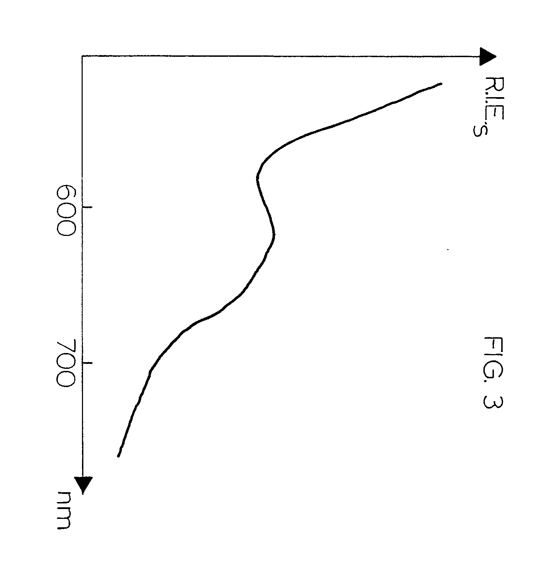

The stimulation spectrum of this phosphor was determined as described hereinbefore. This is shown in Figure 3 and exhibits a peak at about 620 nm.

In Table 1 a survey is given of conversion efficiency and stimulation energy values of phosphors prepared according to the above Example 1 with different $Ce^{3+}$ concentration.

### TABLE 1

| Phosphor No. | Cerium concentration [at %] | for 633 nm stimulation | |
|---|---|---|---|
| | | Conversion efficiency [pJ/mm$^3$/mR] | Stimulation energy [μJ/mm2] |
| 1 | 0.02 | 0.23 | 131 |
| 2 | 0.05 | 0.24 | 134 |
| 3 | 0.10 | 0.26 | 182 |
| 4 | 0.20 | 0.22 | 196 |
| 5 | 1.0 | 0.13 | 713 |

EXAMPLE 2

2.25810 g of $Y_2O_3$, 0.60000 g of colloidal $SiO_2$ (AEROSIL 380 - trade name of DEGUSSA W. Germany), 0.060000 g of $NH_4F$ and 0.00689 g of $CeO_2$ and 0.00697 g of $Sm_3O_3$ were mixed for 15 minutes with 10 ml of ethanol in a planetary ball mill. The mixture was fired in an aluminium oxide crucible for about 5 hours at 1250 °C after the oven had been heated to that temperature in 8 hours. Nitrogen was flowed through the oven at a rate of about 50 ml/min.

$Y_2SiO_5$ doped with 0.2 at % $Ce^{3+}$ and 0.2 at 96 $Sm^{3+}$ was obtained. The conversion efficiency and stimulation energy for stimulation with He-Ne laser (633 nm) was determined as described in Example 1 and were 1.90 $pJ/mm^3/mR$ and 393 $\mu J/mm^2$ respectively.

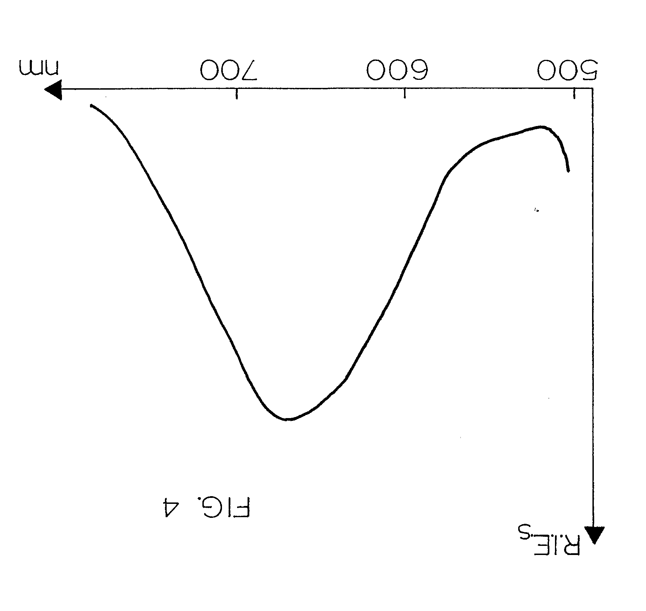

The stimulation spectrum of this phosphor was determined as described hereinbefore. This is shown in Figure 4 and exhibits a peak at about 665 nm.

**Claims**

1. A method for recording and reproducing an X-ray image which method comprises the steps of :
   (1) causing a photostimulable phosphor to absorb image-wise or pattern-wise modulated X-rays,
   (2) photostimulating said phosphor with stimulating electromagnetic radiation selected from visible light and infrared light to release from the phosphor in accordance with the absorbed X-rays electromagnetic radiation different in wavelength characteristic from the radiation used in the photostimulation, and
   (3) detecting said light emitted by photostimulation,
   wherein said phosphor is an oxyorthosilicate corresponding to the following empirical formula (I) :

   $Y_2SiO_5$:$Ce^{3+}$, $Sm^{3+}$     (I)

   wherein :
   $Ce^{3+}$ is present in an atomic percentage in the range from 0.01 to 5 with respect to the yttrium concentration taken as 100 atom %,
   $Sm^{3+}$ is present in an atomic percentage in the range from 0 to 5 with respect to the yttrium concentration taken as 100 atom %.

2. A method according to claim 1, wherein the photostimulation proceeds with light emitted by a He-Ne laser or argon ion laser.

3. A method according to claim 1 or 2, wherein the detection of the light emitted by photostimulation proceeds with a phototube providing electrical signals that are digitized and stored.

4. A method according to claim 3, wherein after storage said signals are subjected to digital processing.

5. A method according to claim 3, wherein digital signals obtained from analog-digital conversion of the electrical signals corresponding with the light obtained through photostimulation are displayed on a cathode-ray tube.

6. A method according to claim 3, wherein the digital signals are transformed into analog signals that are used to modulate a writing laser beam.

7. A method according to claim 6, wherein the modulated laser beam is used to scan a photographic material.

8. A radiation image storage panel comprising in a binder layer a photostimulable phosphor, wherein said phosphor is an oxyorthosilicate corresponding to the following empirical formula (I) :

   $Y_2SiO_5$:$Ce^{3+}$, $Sm^{3+}$     (I)

   wherein :
   $Ce^{3+}$ is present in an atomic percentage in the range from 0.01 to 5 with respect to the yttrium concentration taken as 100 atom %,
   $Sm^{3+}$ is present in an atomic percentage in the range from 0 to 5 with respect to the yttrium concentration taken as 100 atom %.

9. A radiation image storage panel according to claim 8, wherein the phosphor is applied at a coverage in the range from 300 to 1500 g/m2.

**10.** A radiation image storage panel according to claim 8 or 9, wherein the phosphor layer is used as a supported layer on a support sheet.

FIG.1

EP 0 454 907 A1

FIG. 2

EP 0 454 907 A1

FIG. 3

R.I.E.$_S$

600          700          nm

FIG. 4

European
Patent Office

**EUROPEAN SEARCH
REPORT**

Application Number

**EP 90 20 1111**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 253 589 (ATTC) <br> * claims 1-13 * <br> – – – | 1 | C 09 K 11/79 <br> G 21 K 4/00 |
| A | CHEMICAL ABSTRACTS, vol. 95, no. 1, July 81 Columbus, Ohio, USA KASEI OPTONIX: "RARE EARTH-ACTIVATED..." page 681; left-hand column; ref. no. 16902T <br> * abstract * <br> – – – – – | 1 | |

TECHNICAL FIELDS
SEARCHED (Int. Cl.5)

C 09 K
G 21 K

The present search report has been drawn up for all claims

| Place of search | Date of completion of search | Examiner |
|---|---|---|
| The Hague | 30 November 90 | DROUOT M.C. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

 

& : member of the same patent family, corresponding
document